# EUROPEAN PATENT SPECIFICATION

(11) **EP 0 357 062 B1**
(45) Date of publication and mention of the grant of the patent: **18.05.1994**
(21) Application number: 89116057.4
(22) Date of filing: 31.08.1989
(51) Int. Cl.: B29D 11/00

(54) **A process for manufacturing colored contact lenses**
Verfahren zur Herstellung von gefärbten Kontaktlinsen
Procédé de fabrication de lentilles de contact colorées

(30) Priority: 02.09.1988 AR 311845
(43) Date of publication of application: 07.03.1990
(73) Proprietor: LABORATORIO PFÖRTNER CORNEALENT S.A.C.I.F., 1119 Buenos Aires (AR)
(72) Inventor: Pförtner, Tomas, 1638 Vte. Lopez, Bs.As (AR)
(74) Representative: LOUIS, PÖHLAU, LOHRENTZ & SEGETH

(56) References cited:
- US-A- 4 640 805

## Description

It is well known to those versed in the art that cosmetic contact lens, capable of changing or masking totally or partially the color of the iris, have been manufactured with a limited degree of success, for several reasons. For example, those which contain a tint throughout the body of the lens, or the portion corresponding to the iris, because they cannot cause a fundamental color change. The preliminary art related to the manufacture of colored contact lenses that include a zone or pattern covering the iris of the user it is also associated with a relevant bibiography; for example:
- Urbach, in U.S. Patent Des. 211.751, dated July 23, 1968 discloses a design for contact lenses having a dot-matrix pattern covering the outer portion of the iris, in the shape of a regular ring, whose effects are rather ornamental than chromatic.
- Le Grand, in U.S. Patent 3.712.718, dated Jan. 23, 1973, teaches contact lenses having iris patterns penetrating the entire thickness of the lens, that are not intended to cover the entire iris section or to change its color, but to highlight the same.
- Knapp, in U.S. Patents 4.582.402; 4.704.017; and 4.720.188 discloses contact lenses having a colored, opaque or translucent, intermittent pattern deposited over the surface of the entire iris section to attain a coloring effects. The pattern is composed of dots and transparent interstices in several ratios, to allow visualization of the iris structure, obtaining a noticeable color change when observed by the ordinary viewer (i.e. a person having 20/20 vision at five feet). While these lenses are capable of such color change, the result ceases to be natural as the viewer transposes the five feet barrier or is allowed vision at an angle, as dots fail to mimic completely the iris structure, and being deposited on the surface of the lens, are unable to reproduce the color with the depth perception caused by the corneal layer.
   Moreover, the color coating associated with offset pad printing on the surface of the lens is, of course, exposed to the ocular fluids, to which it may be described as only resistant.
- Pförtner has presented applications of Argentine Patents Nrs. 301.045, 308.046, 308.047, 309.706, teaching different types of cosmetic soft contact lenses making use of the offset pad printing method (first applied in Germany during the early 1970's), where the colorants, either totally or partially concealing the user's iris with any desired pattern, may be sandwiched in the lens or deposited on its surface depending on the targeted final thickness. Sandwiched types are costly to produce and those impregnated on top by patented methods share virtues and flaws with Knapp's models.

US-A-4 640 805 shows a process in which a colorant is deposited directly on the surface of a mold. Subsequently a plastic material is injected into the mold and the colorant is dissolved in the injected plastic material. Following the teaching of US-A-4 640 805 the colorant is distributed throughout the lens structure.

DE-OS 19 16 629 shows a process in which a colored contact lense is produced from pre-produced elements. One of said elements is provided with an imprint of an irish pattern.

The process according to DE-OS 19 16 629 is complicated because more separate elements have to be pre-produced and later joined together to form the finished lens.

It is the main object of the present invention a process for preparing colored contact lenses by cast molding comprising taking a convex or concave plastic mold and eventually recovering its surface with one or more layers of the lens material, by means of an offset printing pad with a blank plate, drying the imprint at a temperature no higher than 80°C, and then depositing the colorant directly on the dried imprint by offset pad printing, using a photomecanically engraved plate with an adequated design of human iris, subjecting the mold to a temperature no higher than 80° C, filling the mold with the lens material; polymerizing the resulting lens to obtain a contact lens with a transparent pupil section and a colored annular region whose estructure, covering entirely the user's iris, conceals it partially by means of a screen that, conveniently contouring the pigmented anterior layers of the human iris, is made up of minute opaque, translucent and transparent portions that chromatically interminigle with the pattern of said iris, whereby resulting in a cosmetic contact lens capable of modifying the perceptible iris color of user, that retains a natural appearance, even under almost near vision onlooker gaze.

The present invention makes it possible to produce economically colored contact lenses whose pigments and the corresponding iris design are incorporated within the lens body, thus proposing the best cosmetic result with a remarkable protection of ocular tissues.
It is also to be noted that the lenses obtained with the process of the present invention allow a convenient masking of the anterior layers of the human iris, by making use of photomechanic reproductions of the desired pattern that will always retain naturally balanced proportions of opaque translucent and clear colored parts, to intermingle with the underlaying user's iris.
While the standard procedure will call for use of one plate depicting a screen with a single color, it is also possible to employ several colors with the same plate, or different ones, in successive printing stages, until the desired visual effect is achieved.
Preferred colorants for the process, comprising pigments and binders, are those described in Argentine patents applications Nr. 308.047, 309.706 cited here by way of reference.
The products obtained by the invention have the following advantages over the prior art.
1. Ideal incorparation of pigments into the body of the lens, thus ensuring ocular tissue safety and unfading cosmetic effect during the len's lifespan.
2. More natural appearance than lenses printed on the surface, without increasing its thickness.

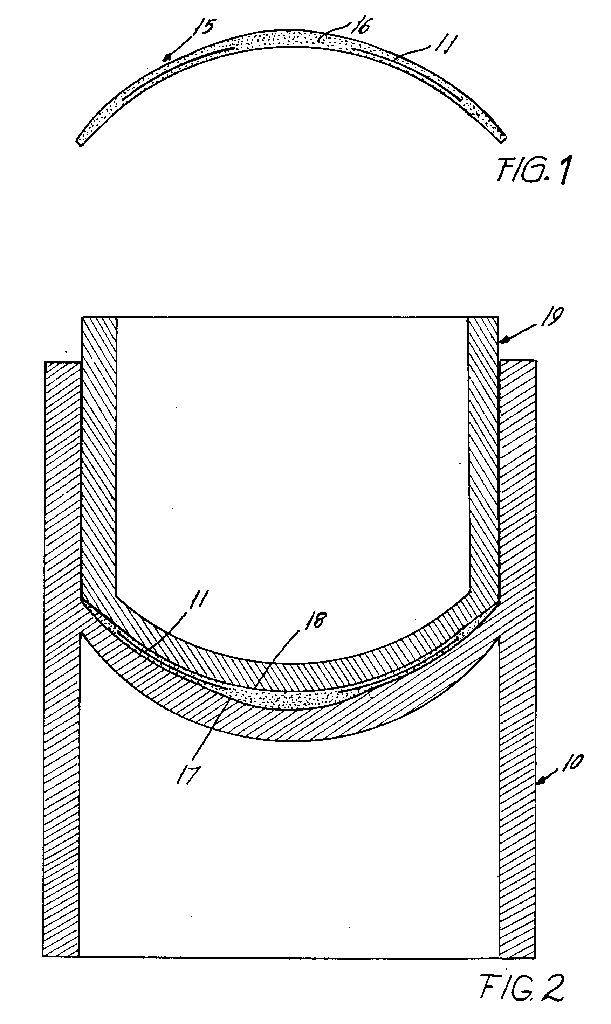

Fig. 1 is a sectional view of totally finished cosmetic contact lens (15), including color offset imprint (11) built in the body of the lens (15). Fig. 2 shows a sectional view of a cosmetic contact lens obtained by "cast molding", according to the process. Here the mold (10) comprises a concave molding surface (17) and a convex one (18).

## Claims

1. A process for manufacturing a contact lens (15) by cast molding comprising the steps of:
a) providing a plastic manufacturing mold (10);
b) depositing on the surface of said mold at least one imprint with lens material by a pad printing process using a blank annular plate;
c) drying the imprint of step b) at a temperature not higher than 80°C;
d) depositing a colorant (11) on the dried imprint by pad printing employing a plate with photomechanically engraved reproductions of the desired iris pattern;
e) subjecting the mold to a temperature not higher than 80°C;
f) filling the mold (10) with the lens material;
g) polymerizing the lens material;
h) removing the polymerized finished lens (15) from the molds;

## Patentansprüche

1. Verfahren zur Herstellung einer Kontaktlinse (15) durch Formgießen, gekennzeichnet durch die folgenden Stufen:
(a) Bereitstellen einer Kunststoff-Fertigungsform (10);
(b) Abscheiden von mindestens einem Aufdruck mit Linsenmaterial durch ein Kissendruckverfahren unter Verwendung einer ringförmigen Blindplatte an der Oberfläche;
(c) Trocknen des Aufdrucks von Stufe (b) bei einer Temperatur von nicht höher als 80 °C;
(d) Abscheiden eines Farbstoffs (11) auf dem getrockneten Aufdruck durch Kissendruck unter Verwendung einer Platte mit photomechanisch eingravierten Reproduktionen des gewünschten Irismusters;
(e) Erhitzen der Form auf einer Temperatur von nicht höher als 80 °C;
(f) Füllen der Form (c) mit dem Linsenmaterial;
(g) Polymerisieren des Linsenmaterials;
(h) Entfernen der polymerisierten fertigen Linse (15) aus der Form.

## Revendications

1. Procédé de fabrication d'une lentille de contact (15) par moulage, comportant :
a) une préparation d'un moule de fabrication en plastique (10),
b) un dépôt à la surface dudit moule d'au moins une impression avec de la matière à lentille par un procédé d'impression au tampon utilisant une plaque annulaire offset,
c) un séchage de l'impression de l'étape b) à une température non supérieure à 80°C,
d) un dépôt d'un colorant (11) sur l'impression sèche, par impression au tampon, en utilisant une plaque avec des reproductions, gravées photomécaniquement, du dessin d'iris souhaité,
e) une exposition du moule à une température non supérieure à 80°C,
f) un remplissage du moule (10) par la matière a lentille,
g) une polymérisation de la matière à lentille,
h) un enlèvement de la lentille polymérisée terminée (15) du moule.
